# EUROPEAN PATENT APPLICATION

(11) **EP 4 376 471 A1**
(43) Date of publication of application: **29.05.2024**
(21) Application number: 22845433.6
(22) Date of filing: 22.07.2022
(51) Int. Cl.: H04W 24/02

(54) **SENSING METHOD AND APPARATUS, AND NETWORK DEVICE**

(30) Priority: 23.07.2021 CN 202110839605
(71) Applicant: Vivo Mobile Communication Co., Ltd., Dongguan, Guangdong 523863 (CN)
(72) Inventor: JIANG, Dajie, Dongguan, Guangdong 523863 (CN); YAO, Jian, Dongguan, Guangdong 523863 (CN); SI, Ye, Dongguan, Guangdong 523863 (CN); PAN, Xiang, Dongguan, Guangdong 523863 (CN); QIN, Fei, Dongguan, Guangdong 523863 (CN)
(74) Representative: Lavoix
(86) International application number: PCT/CN2022/107297
(87) International publication number: WO 2023/001270

(57) **Abstract**

This application pertains to the field of communications technologies, and discloses a sensing method and apparatus, and a network device. The sensing method in embodiments of this application includes: determining, by a first network device, a measurement quantity of a sensing signal; and detecting, by the first network device, the sensing signal to obtain a measurement value corresponding to the measurement quantity, where the sensing signal is sent by a second network device, and the first network device and the second network device are different base stations.

## Description

### CROSS-REFERENCE TO RELATED APPLICATIONS

This application claims priority to Chinese Patent Application No. 202110839605.X, filed in China on July 23, 2021, which is incorporated herein by reference in its entirety.

### TECHNICAL FIELD

This application pertains to the field of communications, and in particular, relates to a sensing method and apparatus, and a network device.

### BACKGROUND

A future mobile communication system such as a BSG system or a 6G system has a sensing capability in addition to a communication capability. The sensing capability means that one or more devices with a sensing capability can, by sending and receiving radio signals, perceive an orientation, a distance, a speed, and other information of a target object, or perform an operation such as detection, tracking, recognition, or imaging on a target object, event, environment, or the like. In the future, with deployment of small base stations having high-band and large-bandwidth capabilities such as millimeter waves and terahertz in a 6G network, resolution in sensing is significantly improved in comparison with centimeter waves, so that the 6G network can provide a more refined sensing service.

Depending on purposes, sensing mainly falls into two categories. The first category is sensing used to assist communication or enhance communication performance. For example, a base station provides more accurate beamforming and beam alignment by tracking a moving track of a device. The other category is sensing not directly related to communication. For example, the base station monitors weather conditions by using radio signals, and a mobile phone recognizes a gesture of a user through millimeter-wave wireless sensing.

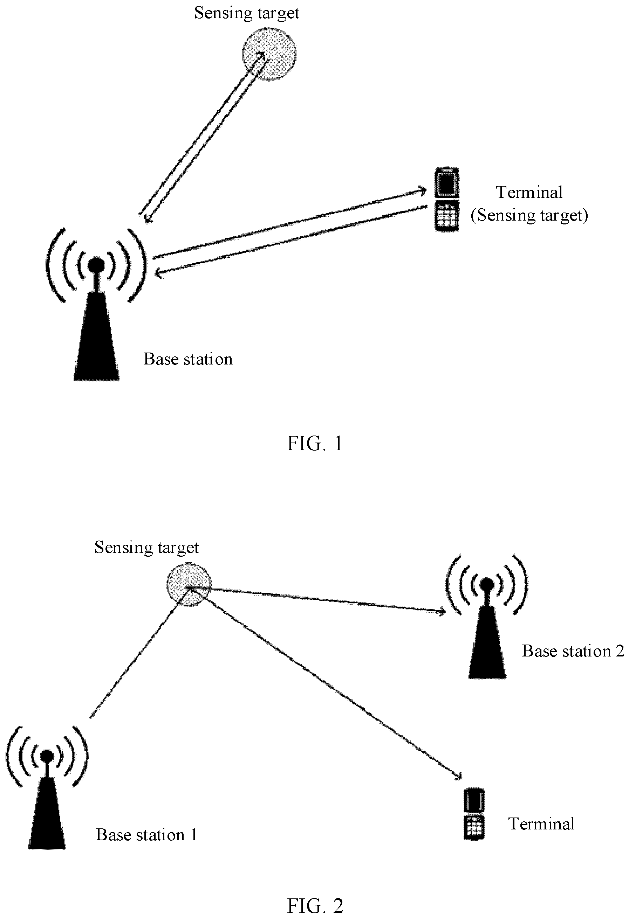

The following sensing modes may be available:
(1) Active sensing: As shown in FIG. 1, a device performs sensing by using a reflected signal such as an echo signal of a signal transmitted by the device. A transmitter and a receiver are at a same location, and can use different antennas to sense environment information around the device.
(2) Passive sensing: As shown in FIG. 2, a transmitter and a receiver are at different locations, and the receiver performs sensing by using a radio signal transmitted by the transmitter. For example, base station 1 senses environment information between base station 1 and base station 2 by receiving a radio signal from base station 2.
(3) Interactive sensing: Through information exchange, a sensing entity and a target object agree on an electromagnetic wave sender, and a sending time, frequency, format, and the like, to complete a process of sensing.

However, in the related art, there is no related procedure for wireless sensing. As a result, a communication procedure is incomplete.

### SUMMARY

Embodiments of this application provide a sensing method and apparatus, and a network device, to resolve a problem in the related art that communication and sensing cannot be implemented due to absence of a related interaction procedure for wireless sensing.

According to a first aspect, a sensing method is provided and includes:
determining, by a first network device, a measurement quantity of a sensing signal; and
detecting, by the first network device, the sensing signal to obtain a measurement value corresponding to the measurement quantity, where
the sensing signal is sent by a second network device, and the first network device and the second network device are different base stations.

According to a second aspect, a sensing apparatus is provided and applied to a first network device and includes:
a first determining module, configured to determine a measurement quantity of a sensing signal; and
a first obtaining module, configured to detect the sensing signal to obtain a measurement value corresponding to the measurement quantity, where
the sensing signal is sent by a second network device, and the first network device and the second network device are different base stations.

According to a third aspect, a sensing method is provided and includes:
sending, by a second network device, a sensing signal to a first network device, so that the first network device detects the sensing signal to obtain a measurement value corresponding to a measurement quantity of the sensing signal, where
the first network device and the second network device are different base stations.

According to a fourth aspect, a sensing apparatus is provided and applied to a second network device and includes:
a first sending module, configured to send a sensing signal to a first network device, so that the first network device detects the sensing signal to obtain a measurement value corresponding to a measurement quantity of the sensing signal, where
the first network device and the second network device are different base stations.

According to a fifth aspect, a sensing method is provided and includes:
sending, by a third network device, first sensing information to a first network device or a second network device, where
the first sensing information includes at least one of a first sensing requirement and configuration information of a sensing signal.

According to a sixth aspect, a sensing apparatus is provided and applied to a third network device and includes:
a second sending module, configured to send first sensing information to a first network device or a second network device, where
the first sensing information includes at least one of a first sensing requirement and configuration information of a sensing signal.

According to a seventh aspect, a network device is provided. The network device includes a processor, a memory, and a program or instructions stored in the memory and capable of running on the processor. When the program or instructions are executed by the processor, the steps of the method according to the first aspect, the third aspect, or the fifth aspect are implemented.

According to an eighth aspect, a network device is provided. The network device is a first network device. The network device includes a processor and a communication interface. The processor is configured to determine a measurement quantity of a sensing signal; and
detect the sensing signal to obtain a measurement value corresponding to the measurement quantity, where
the sensing signal is sent by a second network device, and the first network device and the second network device are different base stations.

According to a ninth aspect, a network device is provided. The network device is a second network device. The network device includes a processor and a communication interface. The communication interface is configured to send a sensing signal to a first network device, so that the first network device detects the sensing signal to obtain a measurement value corresponding to a measurement quantity of the sensing signal, where
the first network device and the second network device are different base stations.

According to a tenth aspect, a network device is provided. The network device is a third network device. The network device includes a processor and a communication interface. The communication interface is configured to send first sensing information to a first network device or a second network device, where
the first sensing information includes at least one of a first sensing requirement and configuration information of a sensing signal.

According to an eleventh aspect, a readable storage medium is provided. The readable storage medium stores a program or instructions. When the program or instructions are executed by a processor, the steps of the method according to the first aspect, the third aspect, or the fifth aspect are implemented.

According to a twelfth aspect, a chip is provided. The chip includes a processor and a communication interface. The communication interface is coupled to the processor. The processor is configured to run a program or instructions to implement the steps of the method according to the first aspect, the third aspect, or the fifth aspect.

According to a thirteenth aspect, a computer program or program product is provided. The computer program or program product is stored in a storage medium. The program or program product is executed by at least one processor to implement the steps of the method according to the first aspect, the third aspect, or the fifth aspect.

In the embodiments of this application, the received sensing signal is detected by using the measurement quantity of the sensing signal, so that the measurement value corresponding to the measurement quantity is obtained. In this way, a network sensing procedure is improved, and it is ensured that a network can perform sensing smoothly.

### BRIEF DESCRIPTION OF DRAWINGS

FIG. 1 is a schematic diagram of active sensing;
FIG. 2 is a schematic diagram of passive sensing;
FIG. 3 is a schematic diagram of classification of waveform integration of communication and sensing;
FIG. 4 is a first schematic flowchart of a sensing method according to an embodiment of this application;
FIG. 5 is a schematic diagram of network elements used in specific application scenario 1;
FIG. 6 is a first schematic modular diagram of a sensing apparatus according to an embodiment of this application;
FIG. 7 is a structural block diagram of a network device according to an embodiment of this application;
FIG. 8 is a second schematic flowchart of a sensing method according to an embodiment of this application;
FIG. 9 is a second schematic modular diagram of a sensing apparatus according to an embodiment of this application;
FIG. 10 is a third schematic flowchart of a sensing method according to an embodiment of this application;
FIG. 11 is a third schematic modular diagram of a sensing apparatus according to an embodiment of this application; and
FIG. 12 is a structural block diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other systems than the NR system, for example, a 6th Generation (6th Generation, 6G) communication system.

The following first describes the related art involved in this application.

Functions and application purposes of wireless sensing are shown in Table 1.

**Table 1 Functions and application purposes of wireless sensing**

| Wireless sensing category | Sensing function | Application purpose |
|---|---|---|
| Large-scale macro sensing | Weather, air quality, and the like | Meteorology, agriculture, and life service |
| | Vehicular flow (crossing), and pedestrian flow (metro entrance) | Smart city, intelligent transportation, and commercial service |
| | Animal activity, migration, and the like | Animal husbandry, ecological and environmental protection, and the like |
| | Object tracking, ranging, speed measurement, contour, and the like | Many application scenarios of conventional radars |
| | Three-dimensional map construction | Intelligent driving, navigation, and smart city |
| Short-range refined sensing | Action and gesture recognition | Intelligent interaction, game, and smart home using a smartphone |
| | Heartbeat, respiration, and the like | Health and medical care |
| | Imaging, material detection, and the like | Security, industry, and the like |

Any sensing function or other sensing requirements in Table 1 can be implemented by sending sensing signals and receiving or detecting sensing signals. Devices that send sensing signals and receive or detect sensing signals may be a same device or different devices.

An integrated design of communication and sensing is feasible in the following four aspects:

First, both a communication system and a sensing system are based on an electromagnetic wave theory, and use emission and reception of electromagnetic waves to complete acquisition and transmission of information.

Both the communication system and the sensing system have structures such as antennas, transmitters, receivers, and signal processors, and their hardware resources largely overlap.

With development of technologies, the two systems also have more overlaps in their operating bands.

There are similarities in key technologies such as signal modulation and reception/detection, and a waveform design.

An air interface design of a BSG system or a 6G system supports both wireless communication signals and wireless sensing signals. Based on integrated means of communication and sensing such as a joint signal design and/or hardware sharing, an integrated design of communication and sensing functions can be implemented. The system has a sensing capability or provides a sensing service while performing information transmission.

Integration of communication and sensing brings the following benefits:
costs are reduced;
a device size is reduced;
device power consumption is reduced;
spectral efficiency is improved; and
interference between communication and sensing is reduced, and system performance is improved.

Currently, a scope of integration of communication and sensing is not clearly defined. In a broad sense, the integration of communication and sensing includes the following:
a same network provides communication services and sensing services;
a same terminal provides communication services and sensing services;
a same spectrum provides communication services and sensing services; and
an integrated communication and sensing service, that is, a joint design of a communication signal and a sensing signal, is completed in same radio transmission.

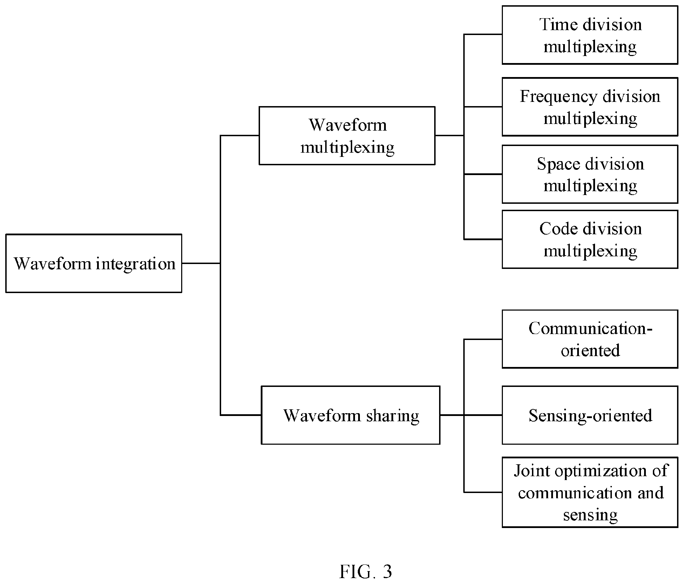

A schematic diagram of classification of waveform integration of communication and sensing is shown in FIG. 3.

A sensing method and apparatus, and a network device provided in embodiments of this application are hereinafter described in detail by using some embodiments and application scenarios thereof with reference to the accompanying drawings.

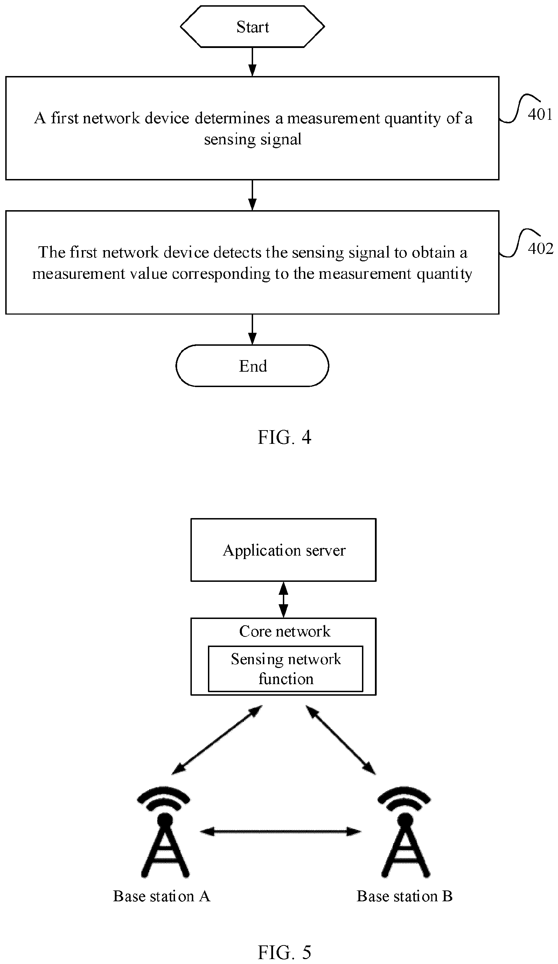

As shown in FIG. 4, an embodiment of this application provides a sensing method, including the following steps.

Step 401: A first network device determines a measurement quantity of a sensing signal.

It should be noted that the sensing signal mentioned in this embodiment of this application is a sensing signal that a terminal needs to measure. For example, there may be one or several sensing signals.

Step 402: The first network device detects the sensing signal to obtain a measurement value corresponding to the measurement quantity.

The sensing signal is sent by a second network device, and the first network device and the second network device are different base stations.

It should be noted that this embodiment of this application is mainly intended for the following: One base station sends a sensing signal, and another base station receives and detects the sensing signal to obtain a measurement value. In other words, the first network device mentioned in this embodiment of this application is a base station (for example, base station A) or a transmission and reception point (Transmission and Reception Point, TRP) located on an access network side; the second network device is another base station (for example, base station B) or another TRP located on the access network side; and a third network device mentioned in this embodiment of this application may be an access and mobility management function (Access and Mobility Management Function, AMF) entity on a core network side. The third network device may alternatively be a sensing function entity, for example, a sensing network function entity or sensing network element. The sensing function entity may be located on the core network side or the access network side. Alternatively, the third network device may be other function entities on the core network side.

It should be noted that the first network device may determine the measurement quantity of the sensing signal in at least one of the following manners.

A11. Receiving first indication information sent by the second network device or the third network device, where the first indication information is used to indicate the measurement quantity of the sensing signal that the first network device needs to measure.

In other words, in this case, the measurement quantity of the sensing signal may be sent to the base station by the base station that sends the sensing signal, or may be sent to the base station by the AMF or the sensing function entity.

A12. Determining, based on a first sensing requirement, the measurement quantity of the sensing signal that the first network device needs to measure.

In other words, in this case, the measurement quantity of the sensing signal is determined by the first network device itself based on the first sensing requirement. The first sensing requirement is sent by the second network device or the third network device to the first network device.

It should also be noted that, to receive the sensing signal accurately, the first network device needs to determine configuration information of the sensing signal before receiving the sensing signal.

Specifically, that the first network device determines configuration information of the sensing signal includes at least one of the following:
B11. The first network device receives first configuration information of the sensing signal, where the first configuration information is sent by the second network device.
B12. The first network device receives second configuration information of the sensing signal, where the second configuration information is sent by the third network device.
B13. The first network device determines third configuration information of the sensing signal based on the first sensing requirement.

It should be noted that the first sensing requirement is sent by the second network device or the third network device to the first network device.

It should be noted herein that the configuration information of the sensing signal may be notified by the second network device to the first network device only. In this case, the first configuration information includes all configurations of the sensing signal. The configuration information of the sensing signal may alternatively be notified by the AMF entity or the sensing function entity to the first network device only. In this case, the second configuration information includes all configurations of the sensing signal. The configuration information of the sensing signal may alternatively be determined by the first network device only. In this case, the third configuration information includes all configurations of the sensing signal. Moreover, the configuration information of the sensing signal may be determined by at least two of the first network device, the second network device, and the AMF entity (or the sensing function entity). In other words, each device determines only some parameters or some configuration information in the configuration information of the sensing signal.

For example, the configuration information of the sensing signal includes three configuration parameters A, B, and C. In a case that the configuration information of the sensing signal is notified by base station B to base station A only, the first configuration information includes the three configuration parameters A, B, and C of the sensing signal. In a case that the configuration information of the sensing signal is notified by the AMF entity or the sensing function entity to base station A only, the second configuration information includes the three configuration parameters A, B, and C of the sensing signal. In a case that the configuration information of the sensing signal is determined by base station A only, the third configuration information includes the three configuration parameters A, B, and C of the sensing signal. In a case that the configuration information of the sensing signal is notified by base station B and the AMF to base station A, the first configuration information includes a part of the three configuration parameters A, B, and C of the sensing signal (for example, the first configuration information includes A), and the second configuration information includes another part of the three configuration parameters A, B, and C of the sensing signal (for example, the first configuration information includes B and C). The rest can be inferred by analogy. Other cases are similar, and are not described herein.

In this case, by using base station A, base station B, and the sensing function entity as examples, the following describes a process before base station A detects the sensing signal.

Case 1: Base station A receives the first sensing requirement sent by the sensing function entity; base station A determines the configuration information of the sensing signal based on the first sensing requirement; base station B determines the configuration information of the sensing signal; base station A receives the first indication information sent by the sensing function entity, where the first indication information is used to indicate the measurement quantity of the sensing signal that base station A needs to measure; base station B sends the sensing signal based on the configuration information of the sensing signal; and base station A receives the sensing signal based on the configuration information of the sensing signal.

It should be noted herein that a manner of determining the configuration information of the sensing signal by base station B includes one of the following:
the second network device receives the second configuration information that is of the sensing signal and that is sent by the third network device; and
the second network device determines the first configuration information of the sensing signal based on second information.

The second information includes at least one of the following:
B111. The first sensing requirement.
   In this case, the first sensing requirement is sent by the third network device to the second network device.
B112. First recommendation information of configuration information, where the first recommendation information is determined by the third network device based on the first sensing requirement.
B113. Second recommendation information of configuration information, where the second recommendation information is sent by the first network device to the second network device.

Case 2: Base station A receives the first sensing requirement sent by base station B; base station A determines the configuration information of the sensing signal based on the first sensing requirement; base station B receives the configuration information that is of the sensing signal and that is sent by the sensing function entity; base station A receives the first indication information sent by base station B, where the first indication information is used to indicate the measurement quantity of the sensing signal that base station A needs to measure; base station B sends the sensing signal based on the configuration information of the sensing signal; and base station A receives the sensing signal based on the configuration information of the sensing signal.

Specifically, a manner of determining the configuration information of the sensing signal by the sensing function entity includes:
determining the second configuration information of the sensing signal based on third information.

The third information includes at least one of the following:
B121. The first sensing requirement.
B122. Sensing capability information sent by the second network device.
   For example, the sensing capability information may be capabilities related to measurement quantities supported by the second network device, for example, which measurement quantities can be obtained by the terminal. For another example, the sensing capability information may be format information of the sensing signal that the second network device can send. For example, a maximum bandwidth of the sensing signal that the second network device can send is 100 MHz. The sensing capability information may be reported by the second network device to the third network device.
B123. Sensing capability information sent by the first network device.
   For example, the sensing capability information may be capabilities related to measurement quantities supported by the first network device, for example, which measurement quantities can be obtained by the first network device. For another example, the sensing capability may be format information of the sensing signal that the first network device can detect. For example, a maximum bandwidth of the sensing signal that the first network device can detect is 100 MHz. The sensing capability may be reported by the first network device to the second network device.
B124. Third recommendation information of the first sensing information, where the third recommendation information is determined by the second network device based on the first sensing requirement and sent to the third network device.
B125. Fourth recommendation information of the first sensing information, where the fourth recommendation information is determined by the first network device based on the first sensing requirement and sent to the third network device.
B126. Fifth recommendation information of the first sensing information, where the fifth recommendation information is sent by the first network device to the third network device.

It should be further noted that the first sensing requirement mentioned in this embodiment of this application is associated with at least one of the following:
C11. A sensing object.
   Optionally, the sensing object includes but is not limited to at least one of an object, a device, a person, an animal, a building, a vehicle, an environment, air quality, humidity, temperature, and a specific area (that is, an area).
C12. A sensing quantity.
   Optionally, the sensing quantity includes but is not limited to at least one of a location of the sensing object, a distance of the sensing object, a moving speed of the sensing object, imaging of the sensing object, a moving track of the sensing object, and texture analysis and material analysis of the sensing object.
C13. A sensing metric.

Optionally, the sensing metric includes but is not limited to at least one of sensing accuracy, a sensing error, a sensing range, a sensing delay, a detection probability, and a false alarm probability.

Specifically, the sensing accuracy includes distance resolution, imaging resolution, moving speed resolution, or angle resolution; and the sensing error includes a distance error, an imaging error, or a moving speed error.

It should be noted that a sensing result is a combination of the sensing object and the sensing quantity.

Optionally, the first sensing requirement may alternatively be associated with the configuration information of the sensing signal or the measurement quantity of the sensing signal.

As shown in Table 2, the first sensing requirement may fall into several sensing categories, and each sensing category is associated with at least one of the configuration information of the sensing signal and the measurement quantity of the sensing signal. The association relationship may be prescribed in a protocol, or notified through signaling between different devices. If a device has a sensing requirement, for example, if the sensing requirement requires that another device (such as base station A) should measure and feed back a measurement quantity related to environment reconstruction, the sensing requirement is a sensing index 1. Optionally, base station A obtains the sensing index 1 based on received signaling sent by another device, and determines the configuration information of the sensing signal and/or the measurement quantity of the sensing signal based on the sensing index 1 and Table 2.

**Table 2 Relationship between sensing classification and configuration information and measurement quantity of sensing signal**

| Sensing index | Sensing classification | Configuration information of sensing signal | Measurement quantity of sensing signal |
|---|---|---|---|
| 1 | Environment reconstruction | SC-FDMA (Single-carrier Frequency-Division Multiple Access, single-carrier frequency-division multiple access) waveform, corresponding parameters and time-frequency resources, and the like | Target radar cross section (Radar Cross Section, RCS) information and received signal strength indicator (Receive Signal Strength Indicator, RSSI) |
| 2 | Weather monitoring | SC-FDMA, corresponding parameters and time-frequency resources, and the like | Channel state information (Channel State Information, CSI), received signal strength indicator (RSSI), and the like |
| 3 | PM2.5 monitoring | OFDM, corresponding parameters and time-frequency resources, and the like | Channel state information CSI and received signal strength indicator (RSSI) |
| 4 | Traffic monitoring | Orthogonal time-frequency space (Orthogonal Time Frequency Space, OTFS), corresponding parameters and time-frequency resources, and the like | Doppler shift |
| 5 | Pedestrian flow monitoring | OFDM, corresponding parameters and time-frequency resources, and the like | Channel state information CSI |

Optionally, in another embodiment of this application, after the first network device obtains the measurement value corresponding to the measurement quantity, the method further includes either of the following steps.

D11. The first network device sends, to the second network device or the third network device, the measurement quantity and the measurement value corresponding to the measurement quantity.

Optionally, in a case that the measurement quantity and the measurement value corresponding to the measurement quantity are sent to the second network device, the second network device may send, to the third network device, the measurement quantity and the measurement value corresponding to the measurement quantity, and the third network device converts the sensing result and sends the sensing result to the terminal (corresponding to a case that the terminal initiates the sensing service) or a fourth network device (corresponding to a case that a device other than the terminal initiates the sensing service). Specifically, the fourth network device may be any other base station than the base station that measures the sensing signal, another network element such as an application server (this case corresponds to a case that a third-party application initiates the sensing service) in the core network, a network management system, or the like.

Optionally, in a case that the measurement quantity and the measurement value corresponding to the measurement quantity are sent to the second network device, the second network device may also convert the sensing result based on the measurement quantity and the measurement value corresponding to the measurement quantity, and send the sensing result to the third network device; and the third network device directly sends the sensing result to the terminal or the fourth network device.

Optionally, in a case that the measurement quantity and the measurement value corresponding to the measurement quantity are sent to the third network device, the third network device converts the sensing result, and sends the sensing result to the terminal or the fourth network device.

D12. The first network device determines the sensing result based on the measurement quantity and the measurement value corresponding to the measurement quantity.

Optionally, after the first network device determines the sensing result, the first network device may further send the sensing result to the third network device.

Optionally, the sensing result is the measurement quantity and the measurement value corresponding to the measurement quantity.

In a case that the first network device sends the sensing result to the third network device, the third network device sends the sensing result to the fourth network device or terminal.

Using a perspective of a sensing service initiator as an example, the following illustrates actions that need to be performed after the first network device (for example, base station A) obtains the measurement quantity.

In a case that the third-party application initiates the sensing service, optionally, after obtaining the measurement value, base station A may send, to base station B, the measurement quantity and the measurement value corresponding to the measurement quantity; then base station B sends, to the sensing function entity, the measurement quantity and the measurement value corresponding to the measurement quantity; the sensing function entity determines the sensing result based on the measurement value, and sends the sensing result to the application server; and the application server sends the sensing result to the third-party application. Optionally, after obtaining the measurement value, base station A may send, to base station B, the measurement quantity and the measurement value corresponding to the measurement quantity; base station B determines the sensing result based on the measurement value, and sends the sensing result to the sensing function entity; the sensing function entity sends the sensing result to the application server; and the application server sends the sensing result to the third-party application. Optionally, after obtaining the measurement value, base station A may determine the sensing result based on the measurement quantity and the measurement value corresponding to the measurement quantity, and send the sensing result to base station B; base station B forwards the sensing result to the sensing function entity; the sensing function entity sends the sensing result to the application server; and the application server sends the sensing results to the third-party application.

In a case that the AMF initiates the sensing service, optionally, after obtaining the measurement value, base station A may send, to base station B, the measurement quantity and the measurement value corresponding to the measurement quantity; then base station B sends, to the AMF, the measurement quantity and the measurement value corresponding to the measurement quantity; and the AMF determines the sensing result based on the measurement value. Optionally, after obtaining the measurement value, base station A may send, to base station B, the measurement quantity and the measurement value corresponding to the measurement quantity; and base station B determines the sensing result based on the measurement value, and sends the sensing result to the AMF. Optionally, after obtaining the measurement value, base station A may determine the sensing result based on the measurement quantity and the measurement value corresponding to the measurement quantity, and send the sensing result to base station B; and base station B forwards the sensing result to the AMF.

In a case that the terminal initiates the sensing service, optionally, after obtaining the measurement value, base station A may send, to base station B, the measurement quantity and the measurement value corresponding to the measurement quantity; then base station B sends, to the AMF, the measurement quantity and the measurement value corresponding to the measurement quantity; and the AMF determines the sensing result based on the measurement value, and then sends the sensing result to the terminal by using non-access stratum (Non-Access Stratum, NAS) signaling. Optionally, after obtaining the measurement value, base station A may send, to base station B, the measurement quantity and the measurement value corresponding to the measurement quantity; base station B determines the sensing result based on the measurement value, and sends the sensing result to the AMF; and the AMF determines the sensing result based on the measurement value, and then sends the sensing result to the terminal by using NAS signaling.

It should also be noted that the sensing result mentioned in this embodiment of this application includes at least one of the following:
E11. Characteristic information of a target object.
   For example, the characteristic information may be presence, a distance, a location, a speed, an acceleration, a material, a shape, a category, a radar cross section RCS, and a polarized scattering characteristic of the target object.
E12. Information related to a target event.
   For example, the information related to the target time may be fall detection, intrusion detection, quantity statistics, indoor positioning, gesture recognition, lip recognition, gait recognition, expression recognition, respiration monitoring, or heart rate monitoring.
E13. Information related to a target environment.
   For example, the information related to the target environment may be humidity, brightness, temperature and humidity, atmospheric pressure, air quality, weather conditions, topography, building/vegetation distribution, population statistics, crowd density, or vehicle density.

Optionally, the sensing result may further include at least one of the following:
E101. The location of the target object.
E102. The distance of the target object.
E103. The speed of the target object.
E104. A detection result of the target object.
E105. A tracking result of the target object.
E106. A recognition result of the target object.
E107. An imaging result of the target object.
E108. The humidity of the target environment.
E109. The temperature of the target environment.
E110. The air quality of the target environment.

The sensing function entity mentioned in this embodiment of this application satisfies at least one of the following:
F101. Managing overall coordination and scheduling of resources required for sensing.
F102. Calculating the sensing result.
F103. Estimating sensing accuracy.
F104. Verifying the sensing result.
F105. Supporting an immediate sensing request.
F106. Supporting a deferred sensing request.
F107. Supporting a periodic or event-triggered sensing request.
F108. Supporting cancellation of a periodic or triggered sensing behavior.
F109. Corresponding to at least one AMF entity.
   In other words, a plurality of sensing function entities may correspond to one AMF entity, or one sensing function entity may be connected to a plurality of AMF entities.
F110. Determining a sensing mode based on second information.

The second information includes at least one of a type of a sensing client, sensing quality of service (Quality of Service, QoS), a sensing capability of the terminal, and a sensing capability of the first network device.

The sensing mode is associated with an entity that sends the sensing signal and an entity that receives the sensing signal. Specifically, a relationship between the entity that sends the sensing signal and the entity that receives the sensing signal, in a correspondence with the sensing mode, includes at least one of the following:
F1101. The first network node sends the sensing signal, and the second network node receives the sensing signal.
   In this case, base station A sends the sensing signal and base station B receives the sensing signal.
F1102. The first network node sends and receives the sensing signal.
   In this case, base station A sends the sensing signal and base station A receives the sensing signal.
F1103. The first network node sends the sensing signal, and a terminal device associated with the first network node receives the sensing signal.
   In this case, base station A sends the sensing signal and the terminal receives the sensing signal.
F1104. A first terminal device sends the sensing signal, and a second terminal device receives the sensing signal.
   In this case, terminal A sends the sensing signal and terminal B receives the sensing signal.
F1105. The first terminal device sends and receives the sensing signal.
   In this case, terminal A sends the sensing signal and terminal A receives the sensing signal.
F1106. The first terminal device sends the sensing signal, and the first network node receives the sensing signal.
   In this case, terminal A sends the sensing signal and base station A receives the sensing signal.

It should also be noted that the sensing function entity may be located on the core network side or the base station side. If the sensing function entity is located on the base station side, all procedures of the sensing service are completed in the radio access network (Radio Access Network, RAN) (in a case that the base station triggers the sensing service, or user equipment (User Equipment, UE) triggers the sensing service). The sensing function entity may be a separate function entity or physical entity, or is deployed in a universal server of the core network as one of functions of the core network, or is deployed on the base station side as one of functions of the base station. The sensing function entity directly exchanges the sensing request and the sensing result with the application server (for example, an application server of an operator); or the sensing function entity exchanges the sensing request and the sensing result with the AMF, and the AMF may directly or indirectly (through a gateway mobile location center (Gateway Mobile Location Center, GMLC) and a network exposure function (Network Exposure Function, NEF)) exchange the sensing request and the sensing result with the application server (for example, a third-party application server).

It should be noted that the configuration information of the sensing signal in this embodiment of this application includes at least one of the following parameters:
H101. A waveform of the sensing signal.
   For example, orthogonal frequency division multiplexing (Orthogonal Frequency Division Multiplexing, OFDM), single-carrier frequency-division multiple access (Single-carrier Frequency-Division Multiple Access, SC-FDMA), orthogonal time frequency space (Orthogonal Time Frequency Space, OTFS), a frequency modulated continuous wave (Frequency Modulated Continuous Wave, FMCW), or a pulse signal.
H102. A subcarrier spacing of the sensing signal.
   For example, a subcarrier spacing of an OFDM system is 30 kHz.
H103. A guard interval of the sensing signal.
   It should be noted that the guard interval is a time interval from a moment when sending of the signal ends to a moment when a latest echo signal of the signal is received. This parameter is proportional to a maximum sensing distance. For example, the guard interval may be obtained through calculation based on 2dmax/c, where dmax is the maximum sensing distance (belonging to the sensing requirement). For example, for a self-sent and self-received sensing signal, dmax represents a maximum distance from a sensing signal transmission and reception point to a signal transmission point. In some cases, an OFDM signal cyclic prefix (Cyclic Prefix, CP) may play a role of a minimum guard interval.
H104. A bandwidth of the sensing signal.
   It should be noted that this parameter is inversely proportional to the distance resolution and may be obtained based on c/(2×delta_d), where delta_d is the distance resolution (belonging to the sensing requirement), and c is the speed of light.
H105. Burst (burst) duration of the sensing signal.
   It should be noted that the burst duration is inversely proportional to the speed resolution (belonging to the sensing requirement). The burst duration is a time span of the sensing signal, and is mainly used for calculating a Doppler shift. This parameter may be obtained through calculation based on c/(2×delta_v×fc), where delta v is the speed resolution, and fc is a carrier frequency of the sensing signal.
H106. A time domain interval of the sensing signal.
   It should be noted that the time domain interval may be obtained through calculation based on c/(2×fc×v_range), where v_range is a maximum speed minus a minimum speed (belonging to the sensing requirements), and this parameter is a time interval between two adjacent sensing signals.
H107. Transmit signal power of the sensing signal.
   For example, one value is taken from -20 dBm to 23 dBm at intervals of 2 dBm.
H108. A signal format of the sensing signal.
   For example, the signal format may be a sounding reference signal (Sounding Reference Signal, SRS), a demodulation reference signal (Demodulation Reference Signal, DMRS), a positioning reference signal (Positioning Reference Signal, PRS), or the like, or another predefined signal, and other information such as a related sequence format.
H109. A signal direction of the sensing signal.
   For example, the signal direction may be the direction of the sensing signal or beam information.
H110. A time resource of the sensing signal.
   For example, the time resource may be an index of a slot in which the sensing signal is located or an index of a symbol in the slot. There are two types of time resources. One type is a one-off time resource. For example, an omnidirectional first signal is sent on one symbol. One type is a non-one-off time resource. For example, in a plurality of groups of periodic time resources or discontinuous time resources (which may include a start time and an end time), sensing signals in a same direction are sent in each group of periodic time resources, and beam directions on periodic time resources of different groups are different.
H111. A frequency resource of the sensing signal.
   Optionally, the frequency resource includes a center frequency of the sensing signal, a bandwidth, a resource block (Resource Block, RB) or subcarrier, a reference point (Point A), a start bandwidth position, or the like.
H1 12. A quasi co-location (Quasi co-location, QCL) relationship of the sensing signal.

For example, the sensing signal includes a plurality of resources, and each resource is QCL with one synchronization signal and PBCH block (or synchronization signal block) (Synchronization Signal and PBCH block, SSB). The QCL includes type A (Type A), type B, type C, or type D.

It should be noted that the measurement quantity in this embodiment of this application includes at least one of the following:
K11. A first type of measurement quantity.

Specifically, the first type of measurement quantity includes at least one of the following:
K111. a channel matrix H;
K112. a received signal strength indicator (RSSI);
K113. reference signal received power (Reference Signal Received Power, RSRP);
K114. channel state information (CSI);
K115. power of each path in a multipath channel;
K116. a delay of each path in the multipath channel;
K117. angle information of each path in the multipath channel;
K118. Doppler spread;
K119. a Doppler shift;
K120. a phase difference between a sensing signal received by a first antenna and a sensing signal received by a second antenna;
K121. a delay difference between the sensing signal received by the first antenna and the sensing signal received by the second antenna; and
K122. a characteristic difference between an I signal and a Q signal.

It should be noted that the characteristic difference may be a phase difference or another difference between the I signal and the Q signal.

It should be noted herein that the I signal and the Q signal are an in-phase signal and a quadrature signal respectively, where I is in-phase (in-phase), Q is quadrature (quadrature), and the phase difference between the I signal and the Q signal is 90 degrees.

K12. A second type of measurement quantity.

Specifically, the second type of measurement quantity includes at least one of the following:
K121. Characteristic information of a target object.

It should be noted that the characteristic information of the target object is information that can reflect an attribute or a status of the target object, and may be at least one of the following: presence of the target object, a distance of the target object, a location of the target object, a speed of the target object, an acceleration of the target object, a material of the target object, a shape of the target object, a category of the target object, a radar cross section (Radar Cross Section, RCS) of the target object, a polarized scattering characteristic, and the like.

K122. Information related to a target event.

It should be noted that the information related to the target event may be information about the target event, that is, information that can be detected or sensed when the target event occurs. The information related to the target event may be at least one of the following: fall detection, intrusion detection, quantity statistics, indoor positioning, gesture recognition, lip recognition, gait recognition, expression recognition, respiration monitoring, heart rate monitoring, and the like.

K123. Information related to a target environment.

It should be noted that the information related to the target environment may be at least one of the following: humidity, brightness, temperature and humidity, atmospheric pressure, air quality, weather conditions, topography, building/vegetation distribution, population statistics, crowd density, vehicle density, and the like.

Optionally, the measurement quantity may further include at least one of the following:
K21. a location, a material, a shape, and/or a category of a reflection point; and
K22. radar spectrum information.

Optionally, the measurement quantity is a measurement quantity for each antenna or a measurement quantity for each sensing resource.

For example, the measurement quantity is a measurement quantity of each antenna (port) at a transmit end or a receive end, or the measurement quantity is a measurement quantity on each sensing resource, for example, a measurement quantity of each resource block (Resource Block, RB), a subcarrier, or an RB group.

It should be noted that, in a case that the core network sends sensing related information to the base station, the core network or the sensing network function entity or the sensing network element determines, based on a target area, which base station is an associated base station, and determines a direction in which the base station sends the sensing signal.

The following describes a specific application scenario in an actual application by using an example.

Specific application scenario 1: Base station A sends a sensing signal, base station B receives the sensing signal, and a third-party application initiates a sensing service.

Network devices used in this scenario are shown in FIG. 5. An implementation process in this scenario is mainly as follows:
Step S101: An application server receives a sensing requirement of a third-party application.

For example, the sensing requirement is a three-dimensional map of a sensing target area (accuracy/resolution of the map is 5 m). The target area may be a specified area, such as a vicinity of a building or an area around target UE. The sensing requirement may include information about the target area, such as longitude and latitude (range) information of the area.

Step S102: The application server (including an on-net server such as an IP multimedia subsystem (IP Multimedia Subsystem, IMS) or an off-net server) sends the sensing requirement to a core network (for example, an AMF) or a sensing network function entity or a sensing network element (if available) in a core network.

Alternatively, the application server sends the sensing requirement to an AMF, and the AMF forwards the requirement to a sensing network function entity or a sensing network element.

It should be noted herein that the sensing network function entity (Sensing Network Function) or the sensing network element in the core network exchanges target information (the target information includes processing a sensing request, exchanging a sensing capability, exchanging sensing assistance information, and exchanging a sensing measurement quantity or a sensing result) with the target UE, a serving base station of the target UE, or a base station associated with the target area, to obtain a target sensing result or sensing measurement quantity (an uplink measurement quantity or a downlink measurement quantity); or may interact with another network element or function in the core network based on the target area, to obtain information about a base station that may require information exchange.

It should be noted herein that the core network (or the sensing network element), the application server, or another node (such as the AMF) completes a supervision procedure. If the AMF forwards the requirement to the sensing network element, and a plurality of sensing network elements may correspond to one AMF, there is a problem of sensing network element selection (selection by the AMF).

A factor considered when the AMF selects the sensing network element includes at least one of the following: requested QoS (such as sensing accuracy, a response time, or a sensing QoS level), an access type (3GPP access or non-3GPP access), an access network (Access Network, AN) type (that is, 5G NR or eLTE) and a serving AN node (that is, a gNodeB or an NG-eNodeB) of the target UE, RAN configuration information, a capability of the sensing network element, load of the sensing network element, a location of the sensing network element, an indication of single-event reporting or multiple-event reporting, event reporting duration, and network slice information.

Step S103: The core network (or the sensing network element) sends the sensing requirement or configuration information of a sensing signal to base station A.

It should also be noted that the configuration information of the sensing signal may be further associated with the sensing requirement. It is only necessary to notify the sensing requirement. A receive end determines the configuration information of the sensing signal based on the sensing requirement and an association relationship.

Optionally, a manner of determining the configuration information of the sensing signal based on the sensing requirement (for example, determining a bandwidth value of the sensing signal based on a sensing resolution requirement) may be at least one of the following manners:

Y11. Base station A reports its sensing capability (a capability related to sending the sensing signal, such as a maximum bandwidth for sending the sensing signal, or maximum transmit power of the sensing signal) to the core network, and/or base station B reports its sensing capability (a capability related to receiving the sensing signal, such as a maximum bandwidth of the sensing signal that can be received, or a supported measurement quantity of the sensing signal) to the core network (the AMF or the sensing network element); and then the core network determines the configuration information of the sensing signal based on the sensing requirement.

Y12. The base station determines the configuration information of the sensing signal based on the sensing requirement.

Y13. The core network determines a part of configuration information of the sensing signal, and the base station determines another part of configuration information of the sensing signal.

Y14. The core network recommends the configuration information of the sensing signal to the base station based on the sensing requirement, and the base station finally determines the configuration information of the sensing signal.

Y15. The base station recommends the configuration information of the sensing signal to the core network based on the sensing requirement, and the core network finally determines the configuration information of the sensing signal.

It should be noted herein that a method for determining base station A is: the core network or the sensing network element determines, based on the target area, that the associated base station is base station A, and determines a direction in which base station A sends the sensing signal.

Step S104: The core network (or the sensing network element) or base station A sends the configuration information of the sensing signal (including time-frequency information, sequence information, or the like) or the sensing requirement to base station B (a receiving base station).

Step S105: The core network (or the sensing network element) or base station A sends the measurement quantity related to the sensing signal that base station B needs to measure (such as an angle of arrival (Angle of Arrival, AoA), an angle of departure (Angle of Departure, AoD), a delay, RSRP, or radar spectrum information) to base station B (the receiving base station); or
the measurement quantity is determined by base station B based on the sensing requirement, and does not need to be indicated by separate signaling (a table of mapping between sensing requirement and measurement quantity).

Step S106: Base station A sends the sensing signal.

It should be noted that base station A sends the sensing signal in a beam sweeping (beam sweeping) manner.

Step S107: Base station B receives the sensing signal.

After receiving the sensing signal, base station B obtains a measurement value corresponding to the measurement quantity. For this measurement value, one of the following processing manners may be selected.

Processing manner 1: Convention from the measurement quantity to the sensing result is completed by the core network or the application server.

Step S108: Base station B sends the measurement quantity to the core network (or the sensing network element); or
base station B sends the measurement quantity to base station A, and base station A sends the measurement quantity to the core network (or the sensing network element).

Step S109: The core network (or the sensing network element) sends the measurement quantity to the application server, and the application server determines the sensing result based on the measurement quantity; or
the core network (or the sensing network element) determines the sensing result based on the measurement quantity, and sends the sensing result to the application server.

Step S 110: The application server sends the sensing result to the third-party application.

Processing manner 2: Conversion from the measurement quantity to the sensing result is completed at the base station.

Step S108: Base station B determines the sensing result based on the measurement quantity, and sends the measurement result to the core network (or the sensing network element).

Step S109: The core network (or the sensing network element) sends the sensing result to the application server.

Step S 110: The application server sends the sensing result to the third-party application.

It should also be noted that information related to base station A, such as an antenna location, synchronization information (single frequency network (Single Frequency Network, SFN) start time), or AI-related information (such as AI training data), also needs to be sent to a node that completes the conversion, to assist in completing the conversion process.

It should also be noted that an accounting function is completed by the core network or the application server.

It should also be noted that sensing signals in the foregoing procedure may be sent by a plurality of base stations, and the sensing signals may also be received by a plurality of base stations. In this case, the core network needs to determine a set of base stations sending the sensing signals and a set of base stations receiving the sensing signals, send configuration information of the sensing signals of the plurality of base stations to the corresponding plurality of base stations respectively, and send measurement quantities related to the sensing signals that need to be measured by the receiving base stations to the corresponding plurality of receiving base stations respectively. Optionally, the plurality of sending base stations need to exchange the configuration information of the sensing signals (for example, a base station acting as a coordinator sends the configuration information of the sensing signals to other sending base stations, and sends measurement quantities related to the sensing signals to other receiving base stations). Correspondingly, in the foregoing procedure, base station A may be TRP A, and base station B may be TRP B, where TRP A and TRP B belong to a same base station or different base stations.

It should also be noted that after a first network device receives a sensing requirement or a sensing-related measurement quantity sent by a second network device or a third network device, the first network device may reject the sensing requirement or accept the sensing requirement.

Specific application scenario 2: Base station A sends a sensing signal, base station B receives the sensing signal, and a core network (or a network management system or a base station) initiates a sensing service.

An implementation process in this scenario is mainly as follows:
Step S201: An AMF in a core network sends a sensing requirement or configuration information of a sensing signal to a sensing network function entity or a sensing network element.

For example, the sensing requirement is a three-dimensional map of a sensing target area (accuracy/resolution of the map is 5 m). The target area may be a specified area, such as a vicinity of a building or an area around target UE. The sensing requirement may include information about the target area, such as longitude and latitude (range) information of the area.

Alternatively, an AMF receives a sensing requirement or configuration information of a sensing signal, which is sent by a network management system, and forwards the sensing requirement or the configuration information of the sensing signal to a sensing network element.

Alternatively, an AMF receives a sensing requirement or configuration information of a sensing signal, which is sent by a base station, and forwards the sensing requirement or the configuration information of the sensing signal to a sensing network element (Note: A sensing requirement or configuration information of a sensing signal of base station A does not need to be sent to a core network, but may be directly sent to base station B).

Step S202: The sensing network function entity or the sensing network element sends the sensing requirement or the configuration information of the sensing signal to base station A (or the AMF sends the sensing requirement or the configuration information of the sensing signal to base station A); or
the configuration information of the sensing signal is associated with the sensing requirement. It is only necessary to notify the sensing requirement. A receive end determines the configuration information of the sensing signal based on the sensing requirement and an association relationship.

Optionally, for an implementation of determining the configuration information of the sensing signal based on the sensing requirement (for example, determining a bandwidth value of the sensing signal based on a sensing resolution requirement), refer to specific application scenario 1.

Step S203: The core network (or the sensing network element) or base station A sends the configuration information of the sensing signal (including time-frequency information, sequence information, or the like) or the sensing requirement to base station B (a receiving base station).

Step S204: The core network (or the sensing network element) or base station A sends a measurement quantity related to the sensing signal (such as an AoA, an AoD, a delay, RSRP, or radar spectrum information) to base station B (the receiving base station); or
the measurement quantity is determined by base station B based on the sensing requirement, and does not need to be indicated by separate signaling (a table of mapping between sensing requirement and measurement quantity).

Step S205: Base station A sends the sensing signal.

It should be noted that base station A sends the sensing signal in a beam sweeping manner.

Step S206: Base station B receives the sensing signal.

After receiving the sensing signal, base station B obtains a measurement value corresponding to the measurement quantity. For this measurement value, one of the following processing manners may be selected.

Processing manner 1: Conversion from the measurement quantity to the sensing result is completed on the core network.

Step S207: Base station B sends the measurement quantity to the core network (the AMF or the sensing network element); or
base station B sends the measurement quantity to base station A, and base station A sends the measurement quantity to the core network (the AMF or the sensing network element).

Step S208: The core network (the AMF or the sensing network element) converts the measurement quantity into the sensing result.

If the sensing requirement of the core network comes from the network management system, the core network sends the sensing result to the network management system; or the core network sends the measurement quantity to the network management system, and the network management system converts the measurement quantity into the sensing result.

If the sensing requirement of the core network comes from the base station, the core network sends the sensing result to the base station.

Processing manner 2: Conversion from the measurement quantity to the sensing result is completed at the base station.

Step S207: Base station B determines the sensing result based on the measurement quantity, and sends the measurement result to the core network (the AMF or the sensing network element).

If the sensing requirement of the core network comes from the network management system, the core network sends the sensing result to the network management system.

If the sensing requirement of the core network comes from the base station, the core network sends the sensing result to the base station.

It should be noted that information related to base station A, such as an antenna location, synchronization information (SFN start time), or AI-related information, also needs to be sent to a node that completes the conversion, to assist in completing the conversion process.

It should be noted herein that if the sensing network function entity or the sensing network element is deployed in the base station, an optional solution is: an entire sensing service does not need to pass through the core network.

It should also be noted that sensing signals in the foregoing procedure may be sent by a plurality of base stations, and the sensing signals may also be received by a plurality of base stations.

In this case, the core network needs to determine a set of base stations sending the sensing signals and a set of base stations receiving the sensing signals, send configuration information of the sensing signals of the plurality of base stations to the corresponding plurality of base stations respectively, and send measurement quantities related to the sensing signals that need to be measured by the receiving base stations to the corresponding plurality of receiving base stations respectively. Optionally, the plurality of sending base stations need to exchange the configuration information of the sensing signals (for example, a base station acting as a coordinator sends the configuration information of the sensing signals to other sending base stations, and sends measurement quantities related to the sensing signals to other receiving base stations). Correspondingly, in the foregoing procedure, base station A may be TRP A, and base station B may be TRP B, where TRP A and TRP B belong to a same base station or different base stations.

It should also be noted that after a first network device receives a sensing requirement or a sensing-related measurement quantity sent by a second network device or a third network device, the first network device may reject the sensing requirement or accept the sensing requirement.

Specific application scenario 3: Base station A sends a sensing signal, base station B receives the sensing signal, and UE initiates a sensing service.

An implementation process in this scenario is mainly as follows:

Step S301: UE sends a sensing requirement or configuration information of a sensing signal to an AMF by using NAS signaling.

For example, the sensing requirement is a three-dimensional map of a sensing target area (accuracy/resolution of the map is 5 m). The target area may be a specified area, such as a vicinity of a building or an area around target UE. The sensing requirement may include information about the target area, such as longitude and latitude (range) information of the area.

Step S302: The AMF sends the sensing requirement or the configuration information of the sensing signal to a sensing network function entity or a sensing network element.

Step S303: The sensing network function entity or the sensing network element sends the sensing requirement or the configuration information of the sensing signal to base station A (or the AMF sends the sensing requirement or the configuration information of the sensing signal to base station A); or
the configuration information of the sensing signal is associated with the sensing requirement. It is only necessary to notify the sensing requirement. A receive end determines the configuration information of the sensing signal based on the sensing requirement and an association relationship.

Optionally, a manner of determining the configuration information of the sensing signal based on the sensing requirement (for example, determining a bandwidth value of the sensing signal based on a sensing resolution requirement) mainly includes at least one of the following:
Y21. Base station A reports its sensing capability (a capability related to sending the sensing signal, such as a maximum bandwidth for sending the sensing signal, or maximum transmit power of the sensing signal) to the core network (the AMF or the sensing network element), and/or base station B reports its sensing capability (a capability related to receiving the sensing signal, such as a maximum bandwidth of the sensing signal that can be received, or a supported measurement quantity of the sensing signal) to the core network; and then the core network determines the configuration information of the sensing signal based on the sensing requirement.
Y22. The base station determines the configuration information of the sensing signal based on the sensing requirement.
Y23. The core network determines a part of configuration information of the sensing signal, and the base station determines another part of configuration information of the sensing signal.
Y24. The core network recommends the configuration information of the sensing signal to the base station based on the sensing requirement, and the base station finally determines the configuration information of the sensing signal.
Y25. The base station recommends the configuration information of the sensing signal to the core network based on the sensing requirement, and the core network finally determines the configuration information of the sensing signal.
Y26. The UE recommends the configuration information of the sensing signal to the base station based on the sensing requirement, and the base station finally determines the configuration information of the sensing signal.
Y27. The UE recommends the configuration information of the sensing signal to the core network based on the sensing requirement, and the core network finally determines the configuration information of the sensing signal.
Y28. The UE determines the configuration information of the sensing signal based on the sensing requirement.

Step S304: The core network (or the sensing network element) or base station A sends the configuration information of the sensing signal (including time-frequency information, sequence information, or the like) or the sensing requirement to base station B (a receiving base station).

Step S305: The core network (or the sensing network element) or base station A sends a measurement quantity related to the sensing signal (such as an AoA, an AoD, a delay, RSRP, or radar spectrum information) to base station B (the receiving base station); or
the measurement quantity is determined by base station B based on the sensing requirement, and does not need to be indicated by separate signaling (a table of mapping between sensing requirement and measurement quantity).

Step S306: Base station A sends the sensing signal.

It should be noted that base station A sends the sensing signal in a beam sweeping manner.

Step S307: Base station B receives the sensing signal.

After receiving the sensing signal, base station B obtains a measurement value corresponding to the measurement quantity. For this measurement value, one of the following processing manners may be selected.

Processing manner 1: Conversion from the measurement quantity to the sensing result is completed on the core network.

Step S308: Base station B sends the measurement quantity to the core network (the AMF or the sensing network element); or
base station B sends the measurement quantity to base station A, and base station A sends the measurement quantity to the core network (the AMF or the sensing network element).

Step S309: The core network (the AMF or the sensing network element) determines the sensing result based on the measurement quantity.

Step S310: The core network (the AMF or the sensing network element) sends the sensing result to the UE (by using NAS signaling).

Processing manner 2: Conversion from the measurement quantity to the sensing result is completed at base station B.

Step S308: Base station B determines the sensing result based on the measurement quantity, and sends the measurement result to the core network (the AMF or the sensing network element).

Step S309: The core network (the AMF or the sensing network element) sends the sensing result to the UE (by using NAS signaling).

Processing manner 3: Conversion from the measurement quantity to the sensing result is completed at the UE.

Step S308: Base station B sends the measurement quantity to the core network (or the sensing network element).

Step S309: The core network (the AMF or the sensing network element) sends the measurement quantity to the UE (by using NAS signaling).

Step S310: The UE determines the sensing result based on the measurement quantity.

It should be noted herein that information related to base station A, such as an antenna location, synchronization information (SFN start time), or AI-related information, also needs to be sent to a node that completes the conversion, to assist in completing the conversion process.

It should also be noted that sensing signals in the foregoing procedure may be sent by a plurality of base stations, and the sensing signals may also be received by a plurality of base stations.

In this case, the core network needs to determine a set of base stations sending the sensing signals and a set of base stations receiving the sensing signals, send configuration information of the sensing signals of the plurality of base stations to the corresponding plurality of base stations respectively, and send measurement quantities related to the sensing signals that need to be measured by the receiving base stations to the corresponding plurality of receiving base stations respectively. Optionally, the plurality of sending base stations need to exchange the configuration information of the sensing signals (for example, a base station acting as a coordinator sends the configuration information of the sensing signals to other sending base stations, and sends measurement quantities related to the sensing signals to other receiving base stations). Correspondingly, in the foregoing procedure, base station A may be TRP A, and base station B may be TRP B, where TRP A and TRP B belong to a same base station or different base stations.

It should also be noted that after a first network device receives a sensing requirement or a sensing-related measurement quantity sent by a second network device or a third network device, the first network device may reject the sensing requirement or accept the sensing requirement.

It should be noted that this embodiment of this application provides a procedure related to wireless sensing based on a sensing signal sent by a base station. The procedure specifically includes a sensing procedure in which base station A sends a sensing signal and base station B receives the sensing signal, signaling exchange between different sensing nodes, and the like. Functions of the sensing network element are added. In this way, a network communication procedure is improved, and it is ensured that sensing is performed smoothly.

It should be noted that the sensing method provided in this embodiment of this application may be performed by a sensing apparatus, or a control module configured to perform the sensing method in the sensing apparatus. A sensing apparatus provided in an embodiment of this application is described by assuming that the sensing method in this embodiment of this application is performed by the sensing apparatus.

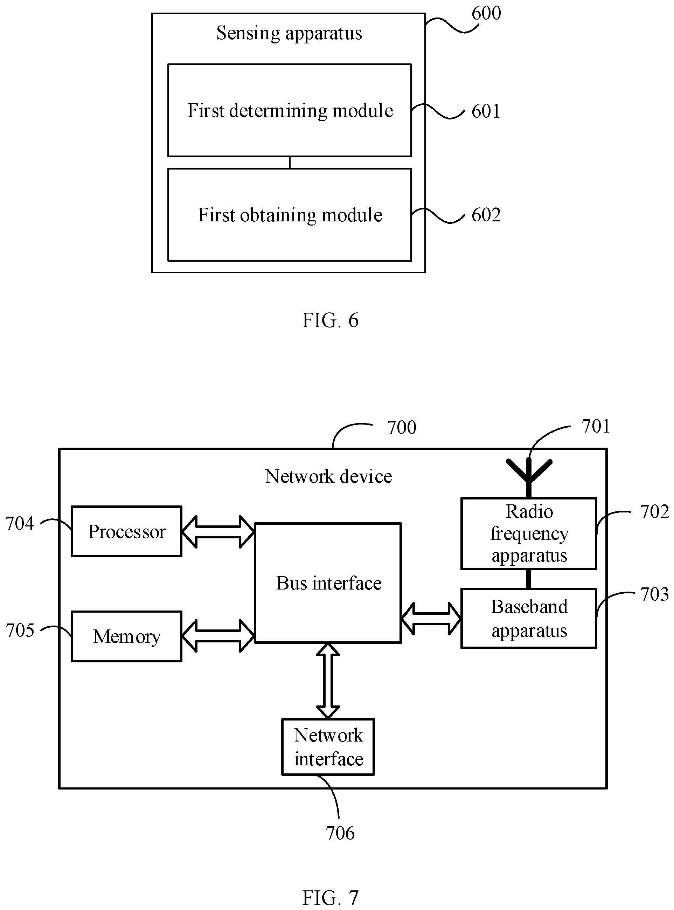

As shown in FIG. 6, an embodiment of this application provides a sensing apparatus 600, including:
a first determining module 601, configured to determine a measurement quantity of a sensing signal; and
a first obtaining module 602, configured to detect the sensing signal to obtain a measurement value corresponding to the measurement quantity, where
the sensing signal is sent by a second network device, and a first network device and the second network device are different base stations.

Optionally, the first determining module 601 includes at least one of the following:
a first receiving unit, configured to receive first indication information sent by the second network device or a third network device, where the first indication information is used to indicate the measurement quantity of the sensing signal that the first network device needs to measure; and
a first determining unit, configured to determine, based on a first sensing requirement, the measurement quantity of the sensing signal that the first network device needs to measure.

Optionally, before the first obtaining module 602 detects the sensing signal to obtain the measurement value corresponding to the measurement quantity, the apparatus further includes:
a second determining module, configured to determine configuration information of the sensing signal.

Optionally, the second determining module is configured to implement at least one of the following:
receiving, by the first network device, first configuration information of the sensing signal, where the first configuration information is sent by the second network device;
receiving, by the first network device, second configuration information of the sensing signal, where the second configuration information is sent by a third network device; and
determining, by the first network device, third configuration information of the sensing signal based on a first sensing requirement.

Optionally, the first sensing requirement is sent by the second network device or the third network device to the first network device; and/or
the first sensing requirement is associated with at least one of the following:
a sensing object;
a sensing quantity; and
a sensing metric.

Optionally, after the first obtaining module 602 obtains the measurement value corresponding to the measurement quantity, the apparatus further includes either of the following:
a first execution module, configured to send, to the second network device or the third network device, the measurement quantity and the measurement value corresponding to the measurement quantity; and
a second execution module, configured to determine a sensing result based on the measurement quantity and the measurement value corresponding to the measurement quantity.

Optionally, after the second execution module determines the sensing result based on the measurement quantity and the measurement value corresponding to the measurement quantity, the apparatus further includes:
a second execution module, configured to send the sensing result to the third network device.

Optionally, the sensing result includes at least one of the following:
characteristic information of a target object;
information related to a target event; and
information related to a target environment.

Optionally, the third network device includes an access and mobility management function AMF entity or a sensing function entity; where
the sensing function entity satisfies at least one of the following:
managing overall coordination and scheduling of resources required for sensing;
calculating the sensing result;
estimating sensing accuracy;
verifying the sensing result;
supporting an immediate sensing request;
supporting a deferred sensing request;
supporting a periodic or event-triggered sensing request;
supporting cancellation of a periodic or triggered sensing behavior;
corresponding to at least one AMF entity; and
determining a sensing mode based on first information, where
the first information includes at least one of a type of a sensing client, sensing quality of service QoS, a sensing capability of a terminal, and a sensing capability of the first network device; and
the sensing mode is associated with an entity that sends the sensing signal and an entity that receives the sensing signal.

Optionally, the configuration information of the sensing signal includes at least one of the following parameters:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi co-location QCL relationship of the sensing signal.

Optionally, the measurement quantity includes at least one of the following:
a first type of measurement quantity; and
a second type of measurement quantity, where
the first type of measurement quantity includes at least one of the following:
   a channel matrix H;
   a received signal strength indicator RSSI;
   reference signal received power RSRP;
   channel state information CSI;
   power of each path in a multipath channel;
   a delay of each path in the multipath channel;
   angle information of each path in the multipath channel;
   Doppler spread;
   a Doppler shift;
   a phase difference between a sensing signal received by a first antenna and a sensing signal received by a second antenna;
   a delay difference between the sensing signal received by the first antenna and the sensing signal received by the second antenna; and
   a characteristic difference between an I signal and a Q signal; and
   the second type of measurement quantity includes at least one of the following:
      characteristic information of a target object;
      information related to a target event; and
      information related to a target environment.

Optionally, the measurement quantity is a measurement quantity for each antenna or a measurement quantity for each sensing resource.

It should be noted that this apparatus embodiment is an apparatus corresponding to the foregoing method. All implementations of the foregoing method embodiment are applicable to this apparatus embodiment, with the same technical effect achieved. Details are not described herein again.

The sensing apparatus provided in this embodiment of this application can implement each process implemented by the method embodiment in FIG. 4, with the same technical effect achieved. To avoid repetition, details are not described herein again.

Preferably, an embodiment of this application further provides a network device. The network device is a first network device. The network device includes a processor, a memory, and a program or instructions stored in the memory and capable of running on the processor. When the program or instructions are executed by the processor, each process of the foregoing embodiment of the sensing method applied to the first network device is implemented, with the same technical effect achieved. To avoid repetition, details are not described herein again.

An embodiment of this application further provides a readable storage medium. The computer-readable storage medium stores a program or instructions. When the program or instructions are executed by a processor, each process of the foregoing embodiment of the sensing method applied to the first network device is implemented, with the same technical effect achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a network device. The network device is a first network device. The network device includes a processor and a communication interface. The processor is configured to determine a measurement quantity of a sensing signal; and
detect the sensing signal to obtain a measurement value corresponding to the measurement quantity, where
the sensing signal is sent by a second network device.

The network device embodiment corresponds to the foregoing method embodiment of the network device, and each implementation process and implementation of the foregoing method embodiment can be applied to the network device embodiment, with the same technical effect achieved.

Specifically, an embodiment of this application further provides a network device. The network device is a first network device. As shown in FIG. 7, the network device 700 includes an antenna 701, a radio frequency apparatus 702, and a baseband apparatus 703. The antenna 701 is connected to the radio frequency apparatus 702. In an uplink direction, the radio frequency apparatus 702 receives information by using the antenna 701, and sends the received information to the baseband apparatus 703 for processing. In a downlink direction, the baseband apparatus 703 processes to-be-sent information, and sends the information to the radio frequency apparatus 702; and the radio frequency apparatus 702 processes the received information and then sends the information out by using the antenna 701.

The frequency band processing apparatus may be located in the baseband apparatus 703. The method performed by the network device in the foregoing embodiment may be implemented in the baseband apparatus 703, and the baseband apparatus 703 includes a processor 704 and a memory 705.

The baseband apparatus 703 may include, for example, at least one baseband unit, where a plurality of chips are disposed on the baseband unit. As shown in FIG. 7, one of the chips is, for example, the processor 704, connected to the memory 705, to invoke a program in the memory 705 to perform the operation of the network device shown in the foregoing method embodiment.

The baseband apparatus 703 may further include a network interface 706, configured to exchange information with the radio frequency apparatus 702, where the interface is, for example, a common public radio interface (Common Public Radio Interface, CPRI).

Specifically, the network device in this embodiment of this application further includes a program or instructions stored in the memory 705 and capable of running on the processor 704. When the processor 704 invokes the program or instructions in the memory 705, the method performed by each module shown in FIG. 6 is performed, with the same technical effect achieved. To avoid repetition, details are not described herein again.

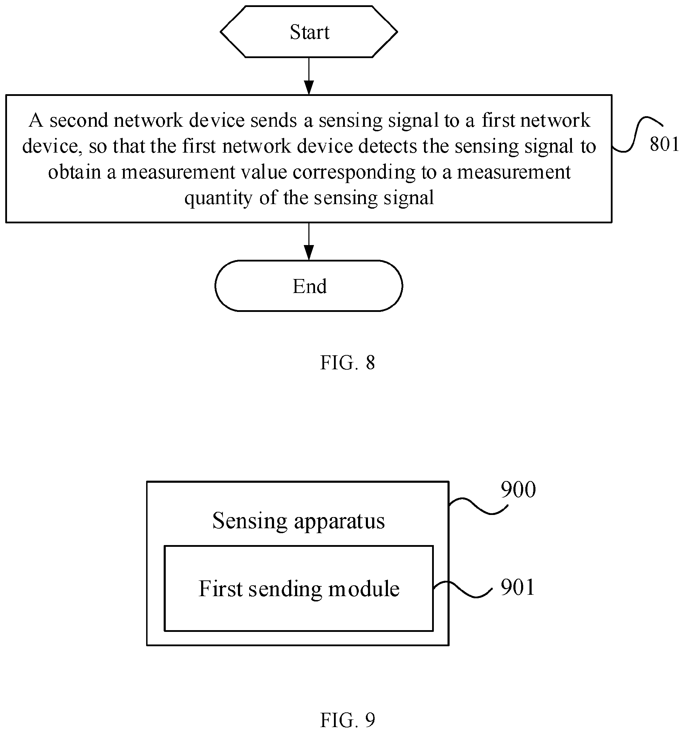

As shown in FIG. 8, an embodiment of this application further provides a sensing method, including the following step.

Step 801: A second network device sends a sensing signal to a first network device, so that the first network device detects the sensing signal to obtain a measurement value corresponding to a measurement quantity of the sensing signal, where
the first network device and the second network device are different base stations.

Optionally, before the second network device sends the sensing signal to the first network device, the method further includes:
the second network device sends first indication information to the first network device, where the first indication information is used to indicate the measurement quantity of the sensing signal that the first network device needs to measure.

Optionally, before the second network device sends the sensing signal to the first network device, the method further includes:
the second network device determines configuration information of the sensing signal.

Optionally, that the second network device determines configuration information of the sensing signal includes one of the following:
the second network device receives second configuration information that is of the sensing signal and that is sent by a third network device; and
the second network device determines first configuration information of the sensing signal based on second information, where
the second information includes at least one of the following:
   a first sensing requirement;
   first recommendation information of configuration information, where the first recommendation information is determined by the third network device based on the first sensing requirement; and
   second recommendation information of configuration information, where the second recommendation information is sent by the first network device to the second network device.

Optionally, after the second network device determines the configuration information of the sensing signal, the method further includes:
the second network device sends second indication information to the first network device, where
the second indication information includes at least one of the first configuration information of the sensing signal and the first sensing requirement.

Optionally, the first sensing requirement is sent by the third network device to the second network device.

Optionally, the first sensing requirement is associated with at least one of the following:
a sensing object;
a sensing quantity; and
a sensing metric.

Optionally, after the second network device sends the sensing signal to the first network device, the method further includes:
the second network device receives the measurement quantity and the measurement value corresponding to the measurement quantity that are sent by the first network device; and
sends, to a third network device, the measurement quantity and the measurement value corresponding to the measurement quantity.

Optionally, the configuration information of the sensing signal includes at least one of the following parameters:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi co-location QCL relationship of the sensing signal.

Optionally, the measurement quantity includes at least one of the following:
a first type of measurement quantity; and
a second type of measurement quantity, where
the first type of measurement quantity includes at least one of the following:
a channel matrix H;
a received signal strength indicator RSSI;
reference signal received power RSRP;
channel state information CSI;
power of each path in a multipath channel;
a delay of each path in the multipath channel;
angle information of each path in the multipath channel;
Doppler spread;
a Doppler shift;
a phase difference between a sensing signal received by a first antenna and a sensing signal received by a second antenna;
a delay difference between the sensing signal received by the first antenna and the sensing signal received by the second antenna; and
a characteristic difference between an I signal and a Q signal; and
the second type of measurement quantity includes at least one of the following:
   characteristic information of a target object;
   information related to a target event; and
   information related to a target environment.

Optionally, the measurement quantity is a measurement quantity for each antenna or a measurement quantity for each sensing resource.

Optionally, the third network device includes an access and mobility management function AMF entity or a sensing function entity; where
the sensing function entity satisfies at least one of the following:
managing overall coordination and scheduling of resources required for sensing;
calculating the sensing result;
estimating sensing accuracy;
verifying the sensing result;
supporting an immediate sensing request;
supporting a deferred sensing request;
supporting a periodic or event-triggered sensing request;
supporting cancellation of a periodic or triggered sensing behavior;
corresponding to at least one AMF entity; and
determining a sensing mode based on first information, where
the first information includes at least one of a type of a sensing client, sensing quality of service QoS, a sensing capability of a terminal, and a sensing capability of the first network device; and
the sensing mode is associated with an entity that sends the sensing signal and an entity that receives the sensing signal.

It should be noted that all descriptions of the second network device in the foregoing embodiment are applicable to the embodiment of the sensing method, with the same technical effect achieved. Details are not described herein.

As shown in FIG. 9, an embodiment of this application further provides a sensing apparatus 900. The apparatus is applied to a second network device and includes:
a first sending module 901, configured to send a sensing signal to a first network device, so that the first network device detects the sensing signal to obtain a measurement value corresponding to a measurement quantity of the sensing signal, where
the first network device and the second network device are different base stations.

Optionally, before the first sending module 901 sends the sensing signal to the first network device, the apparatus further includes:
a third sending module, configured to send first indication information to the first network device, where the first indication information is used to indicate the measurement quantity of the sensing signal that the first network device needs to measure.

Optionally, before the first sending module 901 sends the sensing signal to the first network device, the apparatus further includes:
a third determining module, configured to determine configuration information of the sensing signal.

Optionally, the third determining module is configured to implement one of the following:
receiving, by the second network device, second configuration information that is of the sensing signal and that is sent by a third network device; and
determining, by the second network device, first configuration information of the sensing signal based on second information, where
the second information includes at least one of the following:
   a first sensing requirement;
   first recommendation information of configuration information, where the first recommendation information is determined by the third network device based on the first sensing requirement; and
   second recommendation information of configuration information, where the second recommendation information is sent by the first network device to the second network device.

Optionally, after the third determining module determines the configuration information of the sensing signal, the apparatus further includes:
a fourth sending module, configured to send second indication information to the first network device, where
the second indication information includes at least one of the first configuration information of the sensing signal and the first sensing requirement.

Optionally, the first sensing requirement is sent by the third network device to the second network device.

Optionally, the first sensing requirement is associated with at least one of the following:
a sensing object;
a sensing quantity; and
a sensing metric.

Optionally, after the first sending module 901 sends the sensing signal to the first network device, the apparatus further includes:
a first receiving module, configured to receive the measurement quantity and the measurement value corresponding to the measurement quantity that are sent by the first network device; and
a fifth sending module, configured to send, to a third network device, the measurement quantity and the measurement value corresponding to the measurement quantity.

Optionally, the configuration information of the sensing signal includes at least one of the following parameters:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi co-location QCL relationship of the sensing signal.

Optionally, the measurement quantity includes at least one of the following:
a first type of measurement quantity; and
a second type of measurement quantity, where
the first type of measurement quantity includes at least one of the following:
   a channel matrix H;
   a received signal strength indicator RSSI;
   reference signal received power RSRP;
   channel state information CSI;
   power of each path in a multipath channel;
   a delay of each path in the multipath channel;
   angle information of each path in the multipath channel;
   Doppler spread;
   a Doppler shift;
   a phase difference between a sensing signal received by a first antenna and a sensing signal received by a second antenna;
   a delay difference between the sensing signal received by the first antenna and the sensing signal received by the second antenna; and
   a characteristic difference between an I signal and a Q signal; and
   the second type of measurement quantity includes at least one of the following:
      characteristic information of a target object;
      information related to a target event; and
      information related to a target environment.

Optionally, the measurement quantity is a measurement quantity for each antenna or a measurement quantity for each sensing resource.

Optionally, the third network device includes an access and mobility management function AMF entity or a sensing function entity.

Optionally, the sensing function entity satisfies at least one of the following:
managing overall coordination and scheduling of resources required for sensing;
calculating the sensing result;
estimating sensing accuracy;
verifying the sensing result;
supporting an immediate sensing request;
supporting a deferred sensing request;
supporting a periodic or event-triggered sensing request;
supporting cancellation of a periodic or triggered sensing behavior;
corresponding to at least one AMF entity; and
determining a sensing mode based on first information, where
the first information includes at least one of a type of a sensing client, sensing quality of service QoS, a sensing capability of a terminal, and a sensing capability of the first network device; and
the sensing mode is associated with an entity that sends the sensing signal and an entity that receives the sensing signal.

It should be noted that all descriptions of the second network device in the foregoing embodiment are applicable to the embodiment of the sensing method, with the same technical effect achieved. Details are not described herein.

Preferably, an embodiment of this application further provides a network device. The network device is a second network device. The network device includes a processor, a memory, and a program or instructions stored in the memory and capable of running on the processor. When the program or instructions are executed by the processor, each process of the foregoing embodiment of the sensing method applied to the second network device is implemented, with the same technical effect achieved. To avoid repetition, details are not described herein again.

An embodiment of this application further provides a readable storage medium. The computer-readable storage medium stores a program or instructions. When the program or instructions are executed by a processor, each process of the foregoing embodiment of the sensing method applied to the second network device is implemented, with the same technical effect achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a network device. The network device is a second network device. The network device includes a processor and a communication interface. The communication interface is configured to send a sensing signal to a first network device, so that the first network device detects the sensing signal to obtain a measurement value corresponding to a measurement quantity of the sensing signal.

The network device embodiment corresponds to the foregoing method embodiment of the network device, and each implementation process and implementation of the foregoing method embodiment can be applied to the network device embodiment, with the same technical effect achieved.

Specifically, an embodiment of this application further provides a network device. The network device is a second network device. Specifically, for a structure of the second network device, refer to the structure of the network device in FIG. 7. Details are not described herein again.

Specifically, a processor invokes a program or instructions in a memory to perform the method performed by each module shown in FIG. 9, with the same technical effect achieved. To avoid repetition, details are not described herein again.

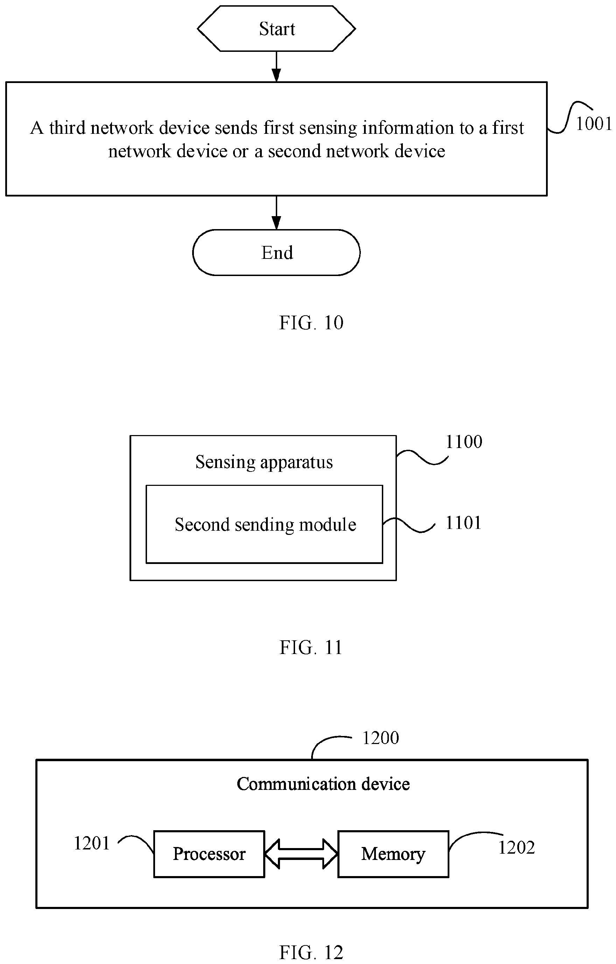

As shown in FIG. 10, an embodiment of this application further provides a sensing method, including the following step.

Step 1001: A third network device sends first sensing information to a first network device or a second network device, where
the first sensing information includes at least one of a first sensing requirement and configuration information of a sensing signal.

Optionally, after the third network device sends the first sensing information to the first network device or the second network device, the method further includes:
the third network device sends first indication information to the first network device or the second network device, where
the first indication information is used to indicate a measurement quantity of the sensing signal that the first network device needs to measure.

Optionally, the configuration information of the sensing signal includes second configuration information of the sensing signal; and
a manner of determining the second configuration information of the sensing signal includes:
determining the second configuration information of the sensing signal based on third information, where
the third information includes at least one of the following:
   the first sensing requirement;
   sensing capability information sent by the second network device;
   sensing capability information sent by the first network device;
   third recommendation information of the first sensing information, where the third recommendation information is determined by the second network device based on the first sensing requirement and sent to the third network device;
   fourth recommendation information of the first sensing information, where the fourth recommendation information is determined by the first network device based on the first sensing requirement and sent to the third network device; and
   fifth recommendation information of the first sensing information, where the fifth recommendation information is sent by the first network device to the third network device.

Optionally, the method further includes:
receiving the first sensing requirement from a terminal, the first network device, or a fourth network device.

Optionally, the first sensing requirement is associated with at least one of the following:
a sensing object;
a sensing quantity; and
a sensing metric.

Optionally, after the third network device sends the first sensing information to the first network device or the second network device, the method further includes one of the following:
receiving a measurement quantity of the sensing signal and a measurement value corresponding to the measurement quantity that are sent by the second network device or the first network device; and
receiving a sensing result that is of the sensing signal and that is sent by the second network device or the first network device.

Optionally, after receiving the measurement quantity of the sensing signal and the measurement value corresponding to the measurement quantity that are sent by the second network device or the first network device, the method further includes:
determining the sensing result based on the measurement quantity and the measurement value corresponding to the measurement quantity; and
sending the sensing result to a terminal or a fourth network device.

Optionally, after receiving the sensing result that is of the sensing signal and that is sent by the second network device or the first network device, the method further includes:
sending the sensing result to a terminal or a fourth network device.

Optionally, the sensing result includes at least one of the following:
characteristic information of a target object;
information related to a target event; and
information related to a target environment.

Optionally, the measurement quantity includes at least one of the following:
a first type of measurement quantity; and
a second type of measurement quantity, where
the first type of measurement quantity includes at least one of the following:
   a channel matrix H;
   a received signal strength indicator RSSI;
   reference signal received power RSRP;
   channel state information CSI;
   power of each path in a multipath channel;
   a delay of each path in the multipath channel;
   angle information of each path in the multipath channel;
   Doppler spread;
   a Doppler shift;
   a phase difference between a sensing signal received by a first antenna and a sensing signal received by a second antenna;
   a delay difference between the sensing signal received by the first antenna and the sensing signal received by the second antenna; and
   a characteristic difference between an I signal and a Q signal; and
   the second type of measurement quantity includes at least one of the following:
      characteristic information of a target object;
      information related to a target event; and
      information related to a target environment.

Optionally, the measurement quantity is a measurement quantity for each antenna or a measurement quantity for each sensing resource.

Optionally, the configuration information of the sensing signal includes at least one of the following parameters:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi co-location QCL relationship of the sensing signal.

Optionally, the third network device includes an access and mobility management function AMF entity or a sensing function entity; where
the sensing function entity satisfies at least one of the following:
managing overall coordination and scheduling of resources required for sensing;
calculating the sensing result;
estimating sensing accuracy;
verifying the sensing result;
supporting an immediate sensing request;
supporting a deferred sensing request;
supporting a periodic or event-triggered sensing request;
supporting cancellation of a periodic or triggered sensing behavior;
corresponding to at least one AMF entity; and
determining a sensing mode based on first information, where
the first information includes at least one of a type of a sensing client, sensing quality of service QoS, a sensing capability of a terminal, and a sensing capability of the first network device; and
the sensing mode is associated with an entity that sends the sensing signal and an entity that receives the sensing signal.

It should be noted that all descriptions of the third network device in the foregoing embodiment are applicable to the embodiment of the sensing method, with the same technical effect achieved. Details are not described herein.

As shown in FIG. 11, an embodiment of this application further provides a sensing apparatus 1100. The apparatus is applied to a third network device and includes:
a second sending module 1101, configured to send first sensing information to a first network device or a second network device, where
the first sensing information includes at least one of a first sensing requirement and configuration information of a sensing signal.

Optionally, after the second sending module 1101 sends the first sensing information to the first network device or the second network device, the method further includes:
a sixth sending module, configured to send first indication information to the first network device or the second network device, where
the first indication information is used to indicate a measurement quantity of the sensing signal that the first network device needs to measure.

Optionally, the configuration information of the sensing signal includes second configuration information of the sensing signal; and
a manner of determining the second configuration information of the sensing signal includes:
determining the second configuration information of the sensing signal based on third information, where
the third information includes at least one of the following:
   the first sensing requirement;
   sensing capability information sent by the second network device;
   sensing capability information sent by the first network device;
   third recommendation information of the first sensing information, where the third recommendation information is determined by the second network device based on the first sensing requirement and sent to the third network device;
   fourth recommendation information of the first sensing information, where the fourth recommendation information is determined by the first network device based on the first sensing requirement and sent to the third network device; and
   fifth recommendation information of the first sensing information, where the fifth recommendation information is sent by the first network device to the third network device.

Optionally, the apparatus further includes one of the following:
a second receiving module, configured to receive the first sensing requirement from a terminal, the first network device, or a fourth network device.

Optionally, the first sensing requirement is associated with at least one of the following:
a sensing object;
a sensing quantity; and
a sensing metric.

Optionally, after the second sending module 1101 sends the first sensing information to the first network device or the second network device, the method further includes one of the following:
a third receiving module, configured to receive a measurement quantity of the sensing signal and a measurement value corresponding to the measurement quantity that are sent by the second network device or the first network device; and
a fourth receiving module, configured to receive a sensing result that is of the sensing signal and that is sent by the second network device or the first network device.

Optionally, after the third receiving module receives the measurement quantity of the sensing signal and the measurement value corresponding to the measurement quantity that are sent by the second network device or the first network device, the apparatus further includes:
a fourth determining module, configured to determine the sensing result based on the measurement quantity and the measurement value corresponding to the measurement quantity; and
a seventh sending module, configured to send the sensing result to a terminal or a fourth network device.

Optionally, after the fourth receiving module receives the sensing result that is of the sensing signal and that is sent by the second network device or the first network device, the apparatus further includes:
an eighth sending module, configured to send the sensing result to a terminal or a fourth network device.

Optionally, the sensing result includes at least one of the following:
characteristic information of a target object;
information related to a target event; and
information related to a target environment.

Optionally, the measurement quantity includes at least one of the following:
a first type of measurement quantity; and
a second type of measurement quantity, where
the first type of measurement quantity includes at least one of the following:
   a channel matrix H;
   a received signal strength indicator RSSI;
   reference signal received power RSRP;
   channel state information CSI;
   power of each path in a multipath channel;
   a delay of each path in the multipath channel;
   angle information of each path in the multipath channel;
   Doppler spread;
   a Doppler shift;
   a phase difference between a sensing signal received by a first antenna and a sensing signal received by a second antenna;
   a delay difference between the sensing signal received by the first antenna and the sensing signal received by the second antenna; and
   a characteristic difference between an I signal and a Q signal; and
   the second type of measurement quantity includes at least one of the following:
      characteristic information of a target object;
      information related to a target event; and
      information related to a target environment.

Optionally, the measurement quantity is a measurement quantity for each antenna or a measurement quantity for each sensing resource.

Optionally, the configuration information of the sensing signal includes at least one of the following parameters:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi co-location QCL relationship of the sensing signal.

Optionally, the third network device includes an access and mobility management function AMF entity or a sensing function entity; where
the sensing function entity satisfies at least one of the following:
managing overall coordination and scheduling of resources required for sensing;
calculating the sensing result;
estimating sensing accuracy;
verifying the sensing result;
supporting an immediate sensing request;
supporting a deferred sensing request;
supporting a periodic or event-triggered sensing request;
supporting cancellation of a periodic or triggered sensing behavior;
corresponding to at least one AMF entity; and
determining a sensing mode based on first information, where
the first information includes at least one of a type of a sensing client, sensing quality of service QoS, a sensing capability of a terminal, and a sensing capability of the first network device; and
the sensing mode is associated with an entity that sends the sensing signal and an entity that receives the sensing signal.

It should be noted that all descriptions of the third network device in the foregoing embodiment are applicable to the embodiment of the sensing method, with the same technical effect achieved. Details are not described herein.

Preferably, an embodiment of this application further provides a network device. The network device is a third network device. The network device includes a processor, a memory, and a program or instructions stored in the memory and capable of running on the processor. When the program or instructions are executed by the processor, each process of the foregoing embodiment of the sensing method applied to the third network device is implemented, with the same technical effect achieved. To avoid repetition, details are not described herein again.

An embodiment of this application further provides a readable storage medium. The computer-readable storage medium stores a program or instructions. The storage medium may be volatile or non-volatile. When the program or instructions are executed by a processor, each process of the foregoing embodiment of the sensing method applied to the third network device is implemented, with the same technical effect achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a network device. The network device is a third network device. The network device includes a processor and a communication interface. The communication interface is configured to send first sensing information to a first network device or a second network device, where
the first sensing information includes at least one of a first sensing requirement and configuration information of a sensing signal.

The network device embodiment corresponds to the foregoing method embodiment of the network device, and each implementation process and implementation of the foregoing method embodiment can be applied to the network device embodiment, with the same technical effect achieved.

Specifically, an embodiment of this application further provides a network device. The network device is a third network device. Specifically, for a structure of the third network device, refer to the structure of the network device in FIG. 7. Details are not described herein again.

Specifically, a processor invokes a program or instructions in a memory to perform the method performed by each module shown in FIG. 11, with the same technical effect achieved. To avoid repetition, details are not described herein again.

Optionally, as shown in FIG. 12, an embodiment of this application further provides a communication device 1200, including a processor 1201, a memory 1202, and a program or instructions stored in the memory 1202 and capable of running on the processor 1201. For example, when the communication device 1200 is a first network device, and the program or instructions are executed by the processor 1201, each process of the foregoing embodiment of the sensing method is implemented, with the same technical effect achieved. When the communication device 1200 is a second network device, and the program or instructions are executed by the processor 1201, each process of the foregoing embodiment of the sensing method is implemented, with the same technical effect achieved. When the communication device 1200 is a third network device, and the program or instructions are executed by the processor 1201, each process of the foregoing embodiment of the sensing method is implemented, with the same technical effect achieved. To avoid repetition, details are not described herein again.

A terminal used in an embodiment of this application may be a device that provides a user with voice and/or data connectivity, for example, a handheld device having a wireless connection function, or another processing device connected to a wireless modem. In different systems, names of terminal devices may also vary. For example, in a 5G system, a terminal device may be referred to as user equipment (User Equipment, UE). A wireless terminal device may communicate with one or more core networks (Core Network, CN) through a radio access network (Radio Access Network, RAN). The wireless terminal device may be a mobile terminal device, such as a mobile phone (also referred to as a "cellular" phone) and a computer having a mobile terminal device, for example, may be a portable, pocket-sized, handheld, computer built-in, or in-vehicle mobile apparatus, which exchanges voice and/or data with the radio access network. For example, it may be a device such as a personal communication service (Personal Communication Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal device may also be referred to as a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), or a user device (user device). This is not limited in the embodiments of this application.

A first network device and a second network device used in an embodiment of this application may be a base transceiver station (Base Transceiver Station, BTS for short) in a global system for mobile communications (Global System for Mobile Communications, GSM) or code division multiple access (Code Division Multiple Access, CDMA), or may be a NodeB (NodeB, NB) in wideband code division multiple access (Wideband Code Division Multiple Access, WCDMA), or may be an evolved NodeB (Evolved NodeB, eNB or eNodeB), a relay station, or an access point in LTE, or may be a base station in a future 5G network, or the like. This is not limited herein.

The first network device, the second network device, and the terminal may respectively use one or more antennas to perform multiple-input multiple-output (Multi Input Multi Output, MIMO) transmission with each other. The MIMO transmission may be single user MIMO (Single User MIMO, SU-MIMO) or multiple user MIMO (Multiple User MIMO, MU-MIMO). Depending on forms and a quantity of antenna combinations, the MIMO transmission may be two-dimensional MIMO (2D-MIMO), three-dimensional MIMO (3D-MIMO), full-dimensional MIMO (FD-MIMO), or massive MIMO (massive-MIMO), or may be diversity transmission, precoding transmission, beamforming transmission, or the like.

In addition, an embodiment of this application provides a chip. The chip includes a processor and a communication interface. The communication interface is coupled to the processor. The processor is configured to run a program or instructions to implement each process of the foregoing embodiment of the sensing method, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a software product. The computer software product is stored in a storage medium (such as a ROM/RAM, a magnetic disk, or an optical disc), and includes several instructions for enabling a terminal (which may be a mobile phone, a computer, a server, an air-conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A sensing method, comprising:
determining, by a first network device, a measurement quantity of a sensing signal; and
detecting, by the first network device, the sensing signal to obtain a measurement value corresponding to the measurement quantity, wherein
the sensing signal is sent by a second network device, and the first network device and the second network device are different base stations.

2. The method according to claim 1, wherein the determining, by a first network device, a measurement quantity of a sensing signal comprises at least one of the following:
receiving, by the first network device, first indication information sent by the second network device or a third network device, wherein the first indication information is used to indicate the measurement quantity of the sensing signal that the first network device needs to measure; and
determining, by the first network device based on a first sensing requirement, the measurement quantity of the sensing signal that the first network device needs to measure.

3. The method according to claim 1, wherein before the detecting, by the first network device, the sensing signal to obtain a measurement value corresponding to the measurement quantity, the method further comprises:
determining, by the first network device, configuration information of the sensing signal.

4. The method according to claim 3, wherein the determining, by the first network device, configuration information of the sensing signal comprises at least one of the following:
receiving, by the first network device, first configuration information of the sensing signal, wherein the first configuration information is sent by the second network device;
receiving, by the first network device, second configuration information of the sensing signal, wherein the second configuration information is sent by a third network device; and
determining, by the first network device, third configuration information of the sensing signal based on a first sensing requirement.

5. The method according to claim 3 or 4, wherein the configuration information of the sensing signal comprises at least one of the following parameters:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi co-location QCL relationship of the sensing signal.

6. The method according to claim 2 or 4, wherein the first sensing requirement is sent by the second network device or the third network device to the first network device; and/or
the first sensing requirement is associated with at least one of the following:
a sensing object;
a sensing quantity; and
a sensing metric.

7. The method according to claim 1, wherein after the first network device obtains the measurement value corresponding to the measurement quantity, the method further comprises either of the following:
sending, by the first network device to the second network device or the third network device, the measurement quantity and the measurement value corresponding to the measurement quantity; and
determining, by the first network device, a sensing result based on the measurement quantity and the measurement value corresponding to the measurement quantity.

8. The method according to claim 7, wherein after the determining, by the first network device, a sensing result based on the measurement quantity and the measurement value corresponding to the measurement quantity, the method further comprises:
sending, by the first network device, the sensing result to the third network device.

9. The method according to claim 7 or 8, wherein the sensing result comprises at least one of the following:
characteristic information of a target object;
information related to a target event; and
information related to a target environment.

10. The method according to claim 2, 4, 7, or 8, wherein the third network device comprises an access and mobility management function AMF entity or a sensing function entity; wherein
the sensing function entity satisfies at least one of the following:
managing overall coordination and scheduling of resources required for sensing;
calculating the sensing result;
estimating sensing accuracy;
verifying the sensing result;
supporting an immediate sensing request;
supporting a deferred sensing request;
supporting a periodic or event-triggered sensing request;
supporting cancellation of a periodic or triggered sensing behavior; and
determining a sensing mode based on first information, wherein
the first information comprises at least one of a type of a sensing client, sensing quality of service QoS, a sensing capability of a terminal, and a sensing capability of the first network device; and
the sensing mode is associated with an entity that sends the sensing signal and an entity that receives the sensing signal.

11. The method according to claim 1, wherein the measurement quantity comprises at least one of the following:
a first type of measurement quantity; and
a second type of measurement quantity, wherein
the first type of measurement quantity comprises at least one of the following:
a channel matrix H;
a received signal strength indicator RSSI;
reference signal received power RSRP;
channel state information CSI;
power of each path in a multipath channel;
a delay of each path in the multipath channel;
angle information of each path in the multipath channel;
Doppler spread;
a Doppler shift;
a phase difference between a sensing signal received by a first antenna and a sensing signal received by a second antenna;
a delay difference between the sensing signal received by the first antenna and the sensing signal received by the second antenna; and
a characteristic difference between an I signal and a Q signal; and
the second type of measurement quantity comprises at least one of the following:
characteristic information of a target object;
information related to a target event; and
information related to a target environment.

12. A sensing method, comprising:
sending, by a second network device, a sensing signal to a first network device, so that the first network device detects the sensing signal to obtain a measurement value corresponding to a measurement quantity of the sensing signal, wherein
the first network device and the second network device are different base stations.

13. The method according to claim 12, wherein before the sending, by a second network device, a sensing signal to a first network device, the method further comprises:
sending, by the second network device, first indication information to the first network device, wherein the first indication information is used to indicate the measurement quantity of the sensing signal that the first network device needs to measure.

14. The method according to claim 12, wherein before the sending, by a second network device, a sensing signal to a first network device, the method further comprises:
determining, by the second network device, configuration information of the sensing signal.

15. The method according to claim 14, wherein the determining, by the second network device, configuration information of the sensing signal comprises one of the following:
receiving, by the second network device, second configuration information that is of the sensing signal and that is sent by a third network device; and
determining, by the second network device, first configuration information of the sensing signal based on second information, wherein
the second information comprises at least one of the following:
a first sensing requirement;
first recommendation information of configuration information, wherein the first recommendation information is determined by the third network device based on the first sensing requirement; and
second recommendation information of configuration information, wherein the second recommendation information is sent by the first network device to the second network device.

16. The method according to claim 15, wherein after the determining, by the second network device, configuration information of the sensing signal, the method further comprises:
sending, by the second network device, second indication information to the first network device, wherein
the second indication information comprises at least one of the first configuration information of the sensing signal and the first sensing requirement.

17. The method according to claim 15 or 16, wherein the first sensing requirement is sent by the third network device to the second network device.

18. The method according to claim 12, wherein after the sending, by a second network device, a sensing signal to a first network device, the method further comprises:
receiving, by the second network device, the measurement quantity and the measurement value corresponding to the measurement quantity that are sent by the first network device; and
sending, to a third network device, the measurement quantity and the measurement value corresponding to the measurement quantity.

19. A sensing method, comprising:
sending, by a third network device, first sensing information to a first network device or a second network device, wherein
the first sensing information comprises at least one of a first sensing requirement and configuration information of a sensing signal.

20. The method according to claim 19, wherein after the sending, by a third network device, first sensing information to a first network device or a second network device, the method further comprises:
sending, by the third network device, first indication information to the first network device or the second network device, wherein
the first indication information is used to indicate a measurement quantity of the sensing signal that the first network device needs to measure.

21. The method according to claim 19, wherein the configuration information of the sensing signal comprises second configuration information of the sensing signal; and
a manner of determining the second configuration information of the sensing signal comprises:
determining the second configuration information of the sensing signal based on third information, wherein
the third information comprises at least one of the following:
the first sensing requirement;
sensing capability information sent by the second network device;
sensing capability information sent by the first network device;
third recommendation information of the first sensing information, wherein the third recommendation information is determined by the second network device based on the first sensing requirement and sent to the third network device;
fourth recommendation information of the first sensing information, wherein the fourth recommendation information is determined by the first network device based on the first sensing requirement and sent to the third network device; and
fifth recommendation information of the first sensing information, wherein the fifth recommendation information is sent by the first network device to the third network device.

22. The method according to claim 19 or 21, further comprising:
receiving, by the third network device, the first sensing requirement from a terminal, the first network device, or a fourth network device.

23. The method according to claim 19, wherein after the sending, by a third network device, first sensing information to a first network device or a second network device, the method further comprises one of the following:
receiving, by the third network device, a measurement quantity of the sensing signal and a measurement value corresponding to the measurement quantity that are sent by the second network device or the first network device; and
receiving, by the third network device, a sensing result that is of the sensing signal and that is sent by the second network device or the first network device.

24. The method according to claim 23, wherein after the receiving, by the third network device, a measurement quantity of the sensing signal and a measurement value corresponding to the measurement quantity that are sent by the second network device or the first network device, the method further comprises:
determining, by the third network device, the sensing result based on the measurement quantity and the measurement value corresponding to the measurement quantity; and
sending, by the third network device, the sensing result to a terminal or a fourth network device.

25. The method according to claim 23, wherein after the receiving, by the third network device, a sensing result that is of the sensing signal and that is sent by the second network device or the first network device, the method further comprises:
sending, by the third network device, the sensing result to a terminal or a fourth network device.

26. A sensing apparatus, applied to a first network device, wherein the apparatus comprises:
a first determining module, configured to determine a measurement quantity of a sensing signal; and
a first obtaining module, configured to detect the sensing signal to obtain a measurement value corresponding to the measurement quantity, wherein
the sensing signal is sent by a second network device, and the first network device and the second network device are different base stations.

27. A sensing apparatus, applied to a second network device, wherein the apparatus comprises:
a first sending module, configured to send a sensing signal to a first network device, so that the first network device detects the sensing signal to obtain a measurement value corresponding to a measurement quantity of the sensing signal, wherein
the first network device and the second network device are different base stations.

28. A sensing apparatus, applied to a third network device, wherein the apparatus comprises:
a second sending module, configured to send first sensing information to a first network device or a second network device, wherein
the first sensing information comprises at least one of a first sensing requirement and configuration information of a sensing signal.

29. A network device, comprising a processor, a memory, and a program or instructions stored in the memory and capable of running on the processor, wherein when the program or instructions are executed by the processor, the steps of the sensing method according to any one of claims 1 to 25 are implemented.

30. A readable storage medium, wherein the readable storage medium stores a program or instructions, and when the program or instructions are executed by a processor, the steps of the sensing method according to any one of claims 1 to 25 are implemented.
